(19) Europäisches Patentamt
European Patent Office
Office européen des brevets

(11) **EP 4 564 884 A1**

(12) **EUROPEAN PATENT APPLICATION**
published in accordance with Art. 153(4) EPC

(43) Date of publication:
**04.06.2025 Bulletin 2025/23**

(21) Application number: **23851506.8**

(22) Date of filing: **04.07.2023**

(51) International Patent Classification (IPC):
**H04W 24/02** (2009.01)    **H04W 8/24** (2009.01)
**H04L 5/00** (2006.01)

(52) Cooperative Patent Classification (CPC):
**H04L 5/00; H04W 8/24; H04W 24/02; H04W 64/00;
H04W 72/0453; H04W 72/21**

(86) International application number:
**PCT/CN2023/105703**

(87) International publication number:
**WO 2024/032280 (15.02.2024 Gazette 2024/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **08.08.2022 CN 202210944967**

(71) Applicant: **Huawei Technologies Co., Ltd.
Shenzhen, Guangdong 518129 (CN)**

(72) Inventors:
• **GAO, Xin**
**Shenzhen, Guangdong 518129 (CN)**
• **HUANG, Su**
**Shenzhen, Guangdong 518129 (CN)**
• **LIU, Mengting**
**Shenzhen, Guangdong 518129 (CN)**
• **ZHANG, Li**
**Shenzhen, Guangdong 518129 (CN)**

(74) Representative: **Gill Jennings & Every LLP
The Broadgate Tower
20 Primrose Street
London EC2A 2ES (GB)**

(54) **POSITIONING CONFIGURATION METHOD AND APPARATUS, AND STORAGE MEDIUM**

(57)    This application discloses a positioning configuration method and apparatus, and a storage medium. The method includes: A positioning device/access network device obtains information about a gap between a first reference signal and a second reference signal that are for joint positioning; and sends configuration information of the first reference signal and the second reference signal to a terminal, where the first reference signal and the second reference signal are configured based on the information about the gap between the first reference signal and the second reference signal. A corresponding apparatus and a storage medium are further disclosed. According to the solutions in this application, the gap between the first reference signal and the second reference signal that are for joint positioning may be flexibly set. The information about the gap between the first reference signal and the second reference signal that are for joint positioning is obtained, so that the first reference signal and the second reference signal can be properly configured based on the information about the gap, thereby improving positioning accuracy.

FIG. 10

## Description

This application claims priority to Chinese Patent Application No. 202210944967.X, filed with the China National Intellectual Property Administration on August 8, 2022 and entitled "POSITIONING CONFIGURATION METHOD AND APPARATUS, AND STORAGE MEDIUM", which is incorporated herein by reference in its entirety.

## TECHNICAL FIELD

This application relates to the field of communication technologies, and in particular, to a positioning configuration method and apparatus, and a storage medium.

## BACKGROUND

Generally, positioning accuracy is related to a bandwidth of a positioning reference signal (positioning reference signal, PRS). A larger bandwidth may be obtained through combination by jointly processing PRSs on a plurality of carriers.

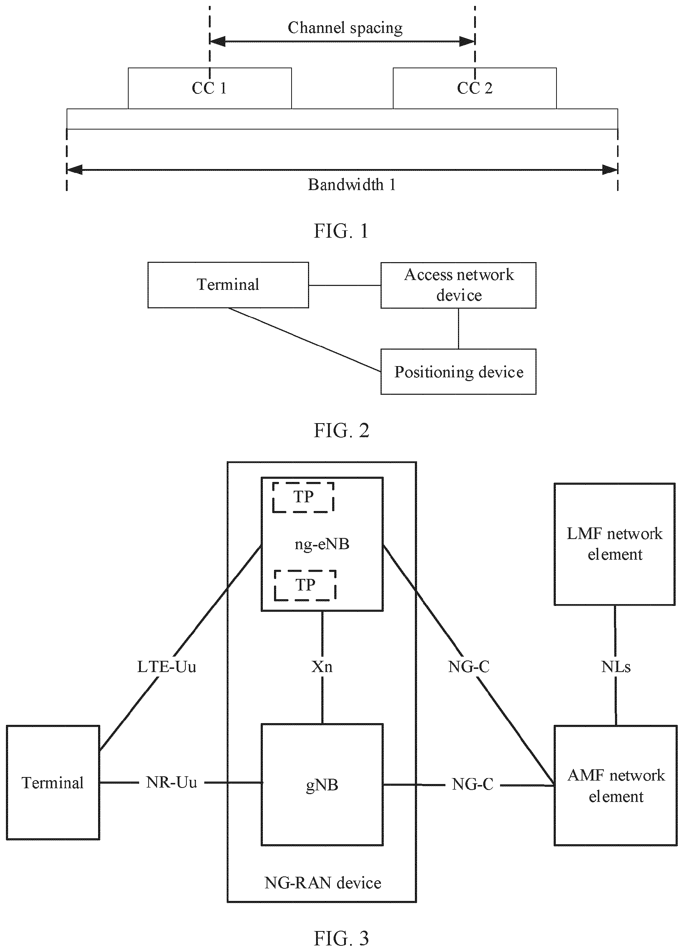

FIG. 1 is a diagram of a channel spacing (channel spacing) during carrier aggregation (carrier aggregation, CA) communication. A protocol defines a bandwidth limit during CA communication, that is, specifies a maximum value of a channel spacing between different component carriers (component carrier, CC).

An existing channel spacing for CA communication is defined as a spacing between center frequencies of two adjacent CCs. However, as shown in FIG. 2, a diagram of a comparison between a channel spacing and a spacing between PRSs (which is referred to as a "positioning spacing"), a PRS for CA positioning may be at any location of a CC. Therefore, the positioning spacing may be different from a channel spacing defined based on CA communication.

An improperly set positioning spacing affects positioning accuracy.

Therefore, how to properly configure a positioning spacing between reference signals that are for joint positioning is a problem to be urgently resolved in this application.

## SUMMARY

This application provides a positioning configuration method and apparatus, and a storage medium, to properly configure a positioning spacing between reference signals that are for joint positioning.

According to a first aspect, a positioning configuration method is provided. The method includes: reporting information about a gap between a first reference signal and a second reference signal that are for joint positioning; and receiving configuration information of the first reference signal and the second reference signal, where the first reference signal and the second reference signal are configured based on the information about the gap between the first reference signal and the second reference signal.

In this aspect, the gap between the first reference signal and the second reference signal that are for joint positioning may be flexibly set. A terminal reports the information about the gap between the first reference signal and the second reference signal that are for joint positioning, so that a positioning device/access network device can properly configure the first reference signal and the second reference signal based on the information about the gap, thereby improving positioning accuracy.

In a possible implementation, the information about the gap between the first reference signal and the second reference signal includes one of the following information: a maximum gap between the first reference signal and the second reference signal, and a proportion of the gap between the first reference signal and the second reference signal in a positioning bandwidth.

In this implementation, the terminal may report the maximum gap between the reference signals, or report the proportion of the gap between the reference signals in the positioning bandwidth. The manner of reporting is flexible.

In another possible implementation, the gap between the first reference signal and the second reference signal is a spacing between a minimum frequency domain location of the first reference signal and a maximum frequency domain location of the second reference signal, or the gap between the first reference signal and the second reference signal is a spacing between a center frequency of the first reference signal and a center frequency of the second reference signal, or the gap between the first reference signal and the second reference signal is a spacing between a lower limit of a frequency band corresponding to the first reference signal and an upper limit of a frequency band corresponding to the second reference signal, or the gap between the first reference signal and the second reference signal is a spacing between a location of a $1^{st}$ subcarrier of the first reference signal and a location of a last subcarrier of the second reference signal; and the positioning bandwidth is a spacing between a maximum frequency domain location of the first reference signal and a minimum frequency domain location of the second reference signal.

In this implementation, the gap between the first reference signal and the second reference signal has a plurality of definitions.

In still another possible implementation, the maximum gap between the first reference signal and the second reference signal is represented as at least one of the following information: a bandwidth between the first reference signal and the second reference signal, and a maximum quantity of resource blocks between the first reference signal and the second reference signal.

In yet another possible implementation, the first reference signal is located on a first component carrier, the second reference signal is located on a second component carrier, and the first component carrier is adjacent to the second component carrier.

In this implementation, joint positioning may be implemented through carrier aggregation.

In still yet another possible implementation, the reference signal includes any one of the following: a PRS and a sounding reference signal (sounding reference signal, SRS).

According to a second aspect, a positioning configuration method is provided. The method includes: obtaining information about a gap between a first reference signal and a second reference signal that are for joint positioning; and sending configuration information of the first reference signal and the second reference signal, where the first reference signal and the second reference signal are configured based on the information about the gap between the first reference signal and the second reference signal.

In this aspect, the gap between the first reference signal and the second reference signal that are for joint positioning may be flexibly set. The information about the gap between the first reference signal and the second reference signal that are for joint positioning is obtained, so that the first reference signal and the second reference signal can be properly configured based on the information about the gap, thereby improving positioning accuracy.

In a possible implementation, the obtaining information about a gap between a first reference signal and a second reference signal that are for joint positioning includes: receiving the reported information about the gap between the first reference signal and the second reference signal.

In another possible implementation, the obtaining information about a gap between a first reference signal and a second reference signal that are for joint positioning includes: determining the information about the gap between the first reference signal and the second reference signal, where the gap between the first reference signal and the second reference signal is associated with a bandwidth of the first reference signal and a bandwidth of the second reference signal.

In still another possible implementation, the information about the gap between the first reference signal and the second reference signal includes one of the following information: a maximum gap between the first reference signal and the second reference signal, and a proportion of the gap between the first reference signal and the second reference signal in a positioning bandwidth.

In yet another possible implementation, the gap between the first reference signal and the second reference signal is a spacing between a minimum frequency domain location of the first reference signal and a maximum frequency domain location of the second reference signal, or the gap between the first reference signal and the second reference signal is a spacing between a center frequency of the first reference signal and a center frequency of the second reference signal, or the gap between the first reference signal and the second reference signal is a spacing between a lower limit of a frequency band corresponding to the first reference signal and an upper limit of a frequency band corresponding to the second reference signal, or the gap between the first reference signal and the second reference signal is a spacing between a location of a $1^{st}$ subcarrier of the first reference signal and a location of a last subcarrier of the second reference signal; and the positioning bandwidth is a spacing between a maximum frequency domain location of the first reference signal and a minimum frequency domain location of the second reference signal.

In still yet another possible implementation, the maximum gap between the first reference signal and the second reference signal is represented as at least one of the following information: a maximum bandwidth between the first reference signal and the second reference signal, and a maximum quantity of resource blocks between the first reference signal and the second reference signal.

In a further possible implementation, the first reference signal is located on a first component carrier, the second reference signal is located on a second component carrier, and the first component carrier is adjacent to the second component carrier.

In still further possible implementation, the reference signal includes any one of the following: a PRS and an SRS.

According to a third aspect, a positioning configuration apparatus is provided. The positioning configuration apparatus may implement the method in the first aspect. For example, the positioning configuration apparatus may be a terminal or a chip system of the terminal. The method may be implemented by software, hardware, or hardware executing corresponding software.

In a possible implementation, the apparatus includes a transceiver unit. The transceiver unit is configured to report information about a gap between a first reference signal and a second reference signal that are for joint positioning; and the transceiver unit is further configured to receive configuration information of the first reference signal and the second reference signal, where the first reference signal and the second reference signal are configured based on the information about the gap between the first reference signal and the second reference signal.

Optionally, the information about the gap between the first reference signal and the second reference signal includes one of the following information: a maximum gap between the first reference signal and the second reference signal, and a proportion of the gap between the first reference signal and the second reference signal in a positioning bandwidth.

Optionally, the gap between the first reference signal and the second reference signal is a spacing between a minimum frequency domain location of the first reference signal and a maximum frequency domain location of the second reference signal, or the gap between the first reference signal and the second reference signal is a spacing between a center frequency of the first reference signal and a center frequency of the second reference signal, or the gap between the first reference signal and the second reference signal is a spacing between a lower limit of a frequency band corresponding to the first reference signal and an upper limit of a frequency band corresponding to the second reference signal, or the gap between the first reference signal and the second reference signal is a spacing between a location of a $1^{st}$ subcarrier of the first reference signal and a location of a last subcarrier of the second reference signal; and the positioning bandwidth is a spacing between a maximum frequency domain location of the first reference signal and a minimum frequency domain location of the second reference signal.

Optionally, the maximum gap between the first reference signal and the second reference signal is represented as at least one of the following information: a bandwidth between the first reference signal and the second reference signal, and a maximum quantity of resource blocks between the first reference signal and the second reference signal.

Optionally, the first reference signal is located on a first component carrier, the second reference signal is located on a second component carrier, and the first component carrier is adjacent to the second component carrier.

Optionally, the reference signal includes any one of the following: a PRS and an SRS.

According to a fourth aspect, a positioning configuration apparatus is provided. The positioning configuration apparatus may implement the method in the second aspect. For example, the positioning configuration apparatus may be a positioning device, an access network device, a chip system of the positioning device, or a chip system of the access network device. The method may be implemented by software, hardware, or hardware executing corresponding software.

In a possible implementation, the apparatus includes a processing unit and a transceiver unit. The processing unit is configured to obtain information about a gap between a first reference signal and a second reference signal that are for joint positioning; and the transceiver unit is configured to send configuration information of the first reference signal and the second reference signal, where the first reference signal and the second reference signal are configured based on the information about the gap between the first reference signal and the second reference signal.

Optionally, the transceiver unit is further configured to receive the reported information about the gap between the first reference signal and the second reference signal.

Optionally, the processing unit is configured to determine the information about the gap between the first reference signal and the second reference signal, where the gap between the first reference signal and the second reference signal is associated with a bandwidth of the first reference signal and a bandwidth of the second reference signal.

Optionally, the information about the gap between the first reference signal and the second reference signal includes one of the following information: a maximum gap between the first reference signal and the second reference signal, and a proportion of the gap between the first reference signal and the second reference signal in a positioning bandwidth.

Optionally, the gap between the first reference signal and the second reference signal is a spacing between a minimum frequency domain location of the first reference signal and a maximum frequency domain location of the second reference signal, or the gap between the first reference signal and the second reference signal is a spacing between a center frequency of the first reference signal and a center frequency of the second reference signal, or the gap between the first reference signal and the second reference signal is a spacing between a lower limit of a frequency band corresponding to the first reference signal and an upper limit of a frequency band corresponding to the second reference signal, or the gap between the first reference signal and the second reference signal is a spacing between a location of a $1^{st}$ subcarrier of the first reference signal and a location of a last subcarrier of the second reference signal; and the positioning bandwidth is a spacing between a maximum frequency domain location of the first reference signal and a minimum frequency domain location of the second reference signal.

Optionally, the maximum gap between the first reference signal and the second reference signal is represented as at least one of the following information: a maximum bandwidth between the first reference signal and the second reference signal, and a maximum quantity of resource blocks between the first reference signal and the second reference signal.

Optionally, the first reference signal is located on a first component carrier, the second reference signal is located on a second component carrier, and the first component carrier is adjacent to the second component carrier.

Optionally, the reference signal includes any one of the following: a PRS and an SRS.

In another possible implementation, the positioning configuration apparatus includes a processor coupled to a memory. The processor is configured to support the apparatus in performing a corresponding function in the foregoing communication method. The memory is configured to be coupled to the processor, and stores a computer program (or computer-executable instructions) and/or data required for the apparatus. Optionally, the positioning configuration apparatus may further include a communication interface, configured to support communication between the apparatus and another network element, for example, sending or receiving of data and/or a signal. For example, the communication interface may be a transceiver, a circuit, a bus, a module, or another type of communication interface. Optionally, the memory may be located inside the positioning configuration apparatus and integrated with the processor, or may be located outside the positioning configuration apparatus.

In still another possible implementation, the positioning configuration apparatus includes a processor and a transceiver apparatus. The processor is coupled to the transceiver apparatus. The processor is configured to execute a computer program or instructions, to control the transceiver apparatus to receive and send information. When the processor executes the computer program or the instructions, the processor is further configured to implement the foregoing method by using a logic circuit or executing code instructions. The transceiver apparatus may be a transceiver, a transceiver circuit, an interface circuit, or an input/output interface, and is configured to receive a signal from another positioning configuration apparatus different from the positioning configuration apparatus and transmit the signal to the processor, or send a signal from the processor to another positioning configuration apparatus different from the positioning configuration apparatus. When the positioning configuration apparatus is a chip, the transceiver apparatus is a transceiver circuit or an input/output interface.

When the positioning configuration apparatus is a chip, a sending unit may be an output unit, for example, an output circuit or a communication interface; and a receiving unit may be an input unit, for example, an input circuit or a communication interface. When the positioning configuration apparatus is a terminal, a sending unit may be a transmitter or a transmitter machine; and a receiving unit may be a receiver or a receiver machine.

According to a fifth aspect, a communication system is provided. The communication system includes the positioning configuration apparatus according to the third aspect and the positioning configuration apparatus according to the fourth aspect.

According to a sixth aspect, a computer-readable storage medium is provided. The computer-readable storage medium stores a computer program or instructions. When the program or the instructions are executed by a processor, the method according to any one of the first aspect, the second aspect, or the implementations of the first aspect or the second aspect is performed.

According to a seventh aspect, a computer program product is provided. When the computer program product is executed on a computing device, the method according to any one of the first aspect, the second aspect, or the implementations of the first aspect or the second aspect is performed.

According to an eighth aspect, a circuit is provided. The circuit is coupled to a memory, and the circuit is configured to perform the method according to any one of the first aspect, the second aspect, or the implementations of the first aspect or the second aspect. The circuit may include a chip circuit.

## BRIEF DESCRIPTION OF DRAWINGS

FIG. 1 is a diagram of a channel spacing during CA communication;
FIG. 2 is a diagram of an architecture of a positioning system to which a positioning configuration method according to an embodiment of this application is applied;
FIG. 3 is a diagram of an architecture of a positioning system to which a positioning configuration method according to an embodiment of this application is applied in a 5G mobile communication system;
FIG. 4 is a diagram of an architecture of another positioning system to which a positioning configuration method according to an embodiment of this application is applied in a 5G mobile communication system;
FIG. 5 is a schematic flowchart for downlink-based positioning according to an embodiment of this application;
FIG. 6 is a diagram for trilateral positioning according to an embodiment of this application;
FIG. 7 is a diagram of a frequency domain location of a positioning reference signal during CA positioning according to an embodiment of this application;
FIG. 8 is a diagram of an example of a channel spacing and a positioning spacing according to an embodiment of this application;
FIG. 9 is a diagram of an example of an autocorrelation function for PRSs with different frequency domain spacings in time domain according to an embodiment of this application;
FIG. 10 is a schematic flowchart of a positioning configuration method according to an embodiment of this application;
FIG. 11A and FIG. 11B are a diagram of examples of positioning spacings according to an embodiment of this application;
FIG. 12 is a diagram of an example of a proportion of a positioning spacing to a positioning bandwidth according to an embodiment of this application;

FIG. 13 is a schematic flowchart of another positioning configuration method according to an embodiment of this application;

FIG. 14 is a schematic flowchart of still another positioning configuration method according to an embodiment of this application;

FIG. 15 is a diagram of a structure of a positioning configuration apparatus according to an embodiment of this application;

FIG. 16 is a simplified diagram of a structure of a terminal according to an embodiment of this application;

FIG. 17 is a simplified diagram of a structure of an access network device according to an embodiment of this application; and

FIG. 18 is a diagram of a structure of another positioning configuration apparatus according to an embodiment of this application.

**DESCRIPTION OF EMBODIMENTS**

The following describes embodiments of this application with reference to the accompanying drawings in embodiments of this application.

The technical solutions provided in this application may be applied to various communication systems, for example, a long term evolution (long term evolution, LTE) system, a 5th generation (5th generation, 5G) communication system (or referred to as an NR system), and another future communication system such as a 6th generation (6th generation, 6G) communication system. Optionally, the technical solutions provided in this application may be further applied to an internet of things (internet of things, IoT) system, a narrowband internet of things (narrowband internet of things, NB-IoT) system, and the like.

FIG. 2 is a diagram of an architecture of a positioning system to which a positioning configuration method according to an embodiment of this application is applied. As shown in FIG. 2, the positioning system includes a terminal, one or more access network devices (one access network device is used as an example for illustration in FIG. 2), and a positioning device. The terminal, the access network device, and the positioning device may directly communicate with each other, or may communicate with each other through forwarding by another device. This is not specifically limited in embodiments of this application. Although not shown, the positioning system may further include another network element, for example, a mobility management network element. This is not specifically limited in embodiments of this application.

Optionally, the positioning device in embodiments of this application may be a location management function (location management function, LMF) network element or a location management component (location management component, LMC) network element, or may be a local location management function (local location management function, LLMF) network element in the network device.

Optionally, the positioning system provided in embodiments of this application may be applied to the foregoing various communication systems. A 5G mobile communication system is used as an example. A network element or entity corresponding to the access network device in FIG. 2 may be a next-generation radio access network (next-generation radio access network, NG-RAN) device in the 5G mobile communication system. A network element or an entity corresponding to the foregoing mobility management network element may be an access and mobility management function (access and mobility management function, AMF) network element in the 5G mobile communication system. This is not specifically limited in embodiments of this application.

For example, FIG. 3 is a diagram of an architecture of a positioning system to which a positioning configuration method according to an embodiment of this application is applied in a 5G mobile communication system. As shown in FIG. 3, in the positioning system, a terminal is connected to a radio access network by using LTE-Uu via a next-generation evolved NodeB (next-generation evolved NodeB, ng-eNB), or by using an NR-Uu interface via a next-generation NodeB (next-generation NodeB, gNB). The radio access network is connected to a core network by using an NG-C interface via an AMF network element. The NG-RAN includes one or more ng-eNBs (one ng-eNB is used as an example for illustration in FIG. 3). The NG-RAN may alternatively include one or more gNBs (one gNB is used as an example for illustration in FIG. 3). The NG-RAN may alternatively include one or more ng-eNBs and one or more gNBs. The ng-eNB is an LTE base station connected to the 5G core network, and the gNB is a 5G base station connected to the 5G core network. The core network includes the AMF network element and an LMF network element. The AMF network element is configured to implement a function like access management, and the LMF network element is configured to implement a function like positioning or positioning assistance. The AMF network element is connected to the LMF network element through an NLs interface.

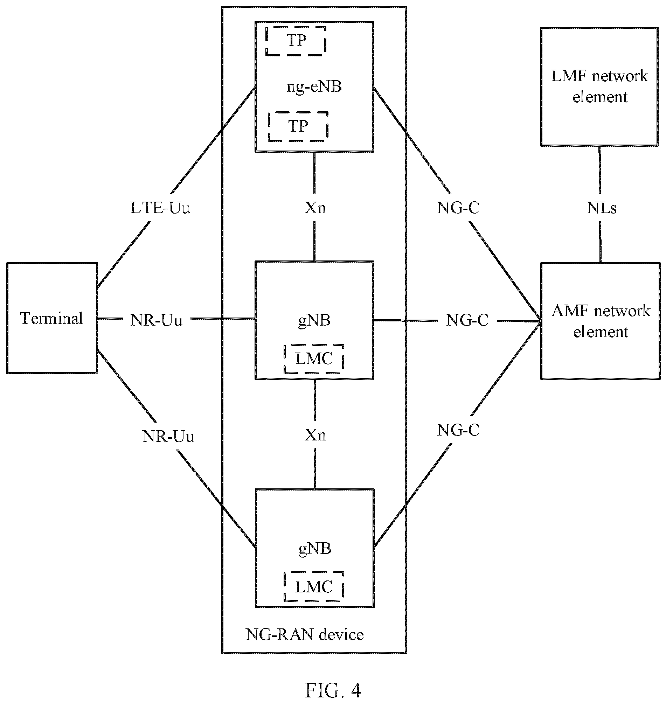

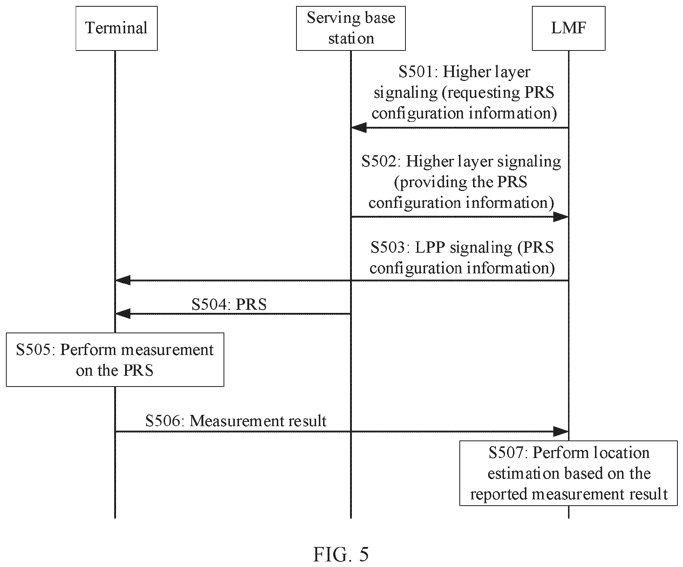

For example, FIG. 4 is a diagram of an architecture of another positioning system to which a positioning configuration method according to an embodiment of this application is applied in a 5G mobile communication system. A difference between the architecture of the positioning system in FIG. 4 and that in FIG. 3 lies in that an apparatus or a component (for example, the LMF network element) of a location management function in FIG. 3 is deployed in the core network, and an apparatus or a component (for example, an LMC network element) of a location management function in FIG. 5 may be deployed in an NG-RAN device. As shown in FIG. 4, a gNB includes an LMC network element. The LMC network element is a partial functional component of the LMF network element and can be integrated into the gNB of the NG-RAN device.

It should be understood that a device or a function node included in the foregoing positioning system in FIG. 3 or FIG. 4 is merely described as an example, and does not constitute a limitation on embodiments of this application. Actually, the positioning system in FIG. 3 or FIG. 4 may further include another network element or device or function node that has an interactive relationship with the device or function node shown in the figure. This is not specifically limited herein.

Optionally, the terminal in embodiments of this application may be an access terminal, a user unit, a user station, a mobile station, a mobile console, a relay station, a remote station, a remote terminal, a mobile device, a user terminal (user terminal), user equipment (user equipment, UE), a terminal (terminal), a wireless communication device, a user agent, a user apparatus, a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal in a future 5G network, a terminal in a future evolved PLMN, a terminal in a future Internet of vehicles, or the like. This is not limited in embodiments of this application.

By way of example, and not limitation, in embodiments of this application, the terminal may be a mobile phone, a tablet computer, a computer having wireless receiving and sending functions, a virtual reality terminal, an augmented reality terminal, a wireless terminal in industrial control, a wireless terminal in self-driving, a wireless terminal in remote surgery, a wireless terminal in a smart grid, a wireless terminal in transportation safety, a wireless terminal in a smart city, a wireless terminal in a smart home, or the like.

By way of example, and not limitation, in embodiments of this application, the wearable device may also be referred to as a wearable intelligent device, and is a general name of a wearable device developed by intelligently designing daily wear by using a wearable technology, such as glasses, gloves, watches, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to work with other devices such as smartphones, such as various smart bands or smart jewelry for monitoring physical signs.

In addition, in embodiments of this application, the terminal may alternatively be a terminal in an Internet of things (internet of things, IoT) system. The IoT is an important component of future information technology development, and a main technical feature of the IoT is connecting objects to a network by using a communication technology, to implement an intelligent network for human-machine interconnection and thing-thing interconnection. In embodiments of this application, the IoT technology can implement massive connections, deep coverage, and terminal power saving by using, for example, a narrowband (narrowband, NB) technology.

In addition, in embodiments of this application, the terminal may further include a sensor like an intelligent printer, a train detector, and a gas station. Main functions of the terminal include collecting data (from some terminals), receiving control information and downlink data from the access network device, sending an electromagnetic wave, and transmitting uplink data to the access network device.

Optionally, the access network device in embodiments of this application may be any communication device that is configured to communicate with the terminal and that has a wireless transceiver function. The access network device includes but is not limited to an evolved NodeB (evolved NodeB, eNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission reception point, TRP), or the like. The access network device may alternatively be a gNB, a TRP, or a TP in a 5G system, or one antenna panel or a group of antenna panels (including a plurality of antenna panels) of a base station in a 5G system. In addition, the access network device may alternatively be a network node that constitutes a gNB or a TP, for example, a BBU or a distributed unit (distributed unit, DU).

In some deployments, a gNB may include a central unit (central unit, CU) and a DU. In addition, the gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical layer (physical layer, PHY). The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the access network device may be a device including one or more of a CU node, a DU node, or an AAU node.

Optionally, the access network device and the terminal in embodiments of this application may communicate with each other by using a licensed spectrum, may communicate with each other by using an unlicensed spectrum, or may communicate with each other by using both a licensed spectrum and an unlicensed spectrum. Communication between the access network device and the terminal may be performed by using a spectrum below 6 gigahertz (gigahertz, GHz), may be performed by using a spectrum above 6 GHz, or may be performed by using both a spectrum below 6 GHz and a spectrum above 6 GHz. A spectrum resource used between the access network device and the terminal 101 is not limited in embodiments of this application.

Optionally, the terminal, the access network device, or the positioning device in embodiments of this application may be deployed on a land, including indoor, outdoor, handheld, or vehicle-mounted forms, or may be deployed on a water surface, or may be deployed on an airplane, a balloon, or an artificial satellite in air. An application scenario of the terminal, the access network device, or the positioning device is not limited in embodiments of this application.

For example, the terms "system" and "network" may be used interchangeably in embodiments of this application.

New radio (new radio, NR) positioning is used as an example. NR, as a new radio technology, has a unique property that can provide more value in positioning capability enhancing.

In the 3rd generation partnership project (the 3rd generation partnership project, 3GPP), a plurality of positioning technologies such as downlink-time difference of arrival (downlink-time difference of arrival, DL-TDOA), downlink-angle of departure (downlink-angle of departure, DL-AOD), uplink-time difference of arrival (uplink-time difference of arrival, UL-TDOA), uplink-angle of arrival (uplink-angle of arrival, UL-AOA), and multi-round trip time (multi-round trip time, multi-RTT) are supported. The DL-TDOA, UL-TDOA, and multi-RTT algorithms are time-of-arrival-based positioning technologies. To be specific, a receive end needs to measure time of arrival of a signal sent by a transmit end, and then convert the time of arrival into information about a distance between the receive end and the transmit end, to finally obtain a location of a to-be-positioned target. The DL-AOD and UL-AOA are angle-based positioning technologies. To be specific, a receive end measures an angle of arrival of a reference signal sent by a transmit end, and infers a location of the receive end based on angle information between the receive end and a plurality of transmit ends whose locations are known.

The following uses the DL-TDOA technology as an example to briefly describe the positioning procedure.

For a downlink-based solution, a downlink reference signal needs to be measured at a terminal, for example, a time difference of arrival of PRSs sent by different base stations is measured. FIG. 5 is a schematic flowchart for a downlink-based positioning according to an embodiment of this application. A measurement process usually includes the following several steps: S501 and S502: An LMF requests configuration information of a positioning reference signal from a serving base station. S503: The LMF indicates, to a terminal, sending configuration information of a downlink reference signal (for example, a PRS). S504: After receiving the indication from the LMF, the terminal starts to receive a positioning reference signal sent by the base station. S505: The terminal performs related measurement on the received positioning reference signal, for example, measures a time difference of arrival between the positioning reference signals. S506: The terminal reports a result obtained through measurement to a positioning server. S507: The positioning server performs location estimation based on the received measurement information.

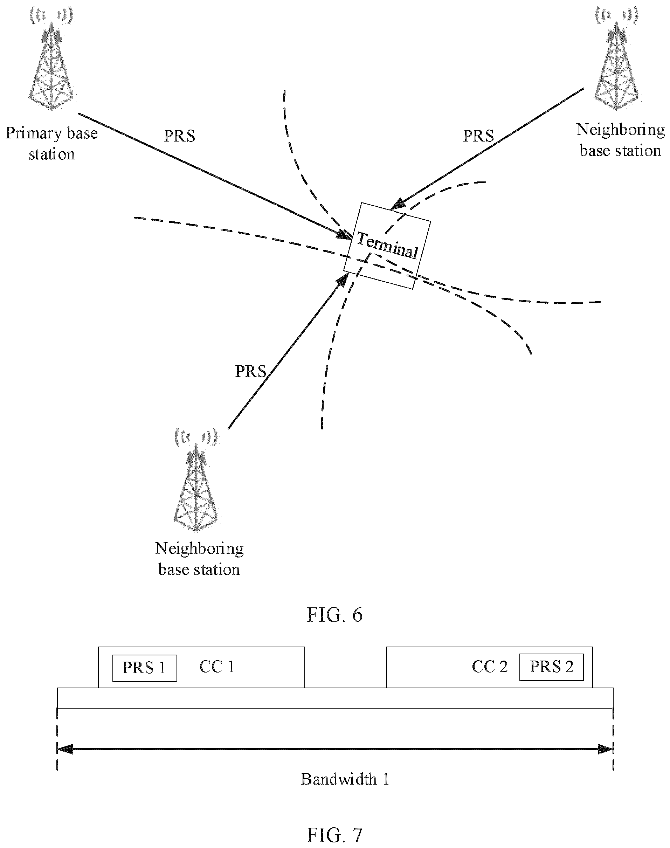

The following briefly describes how the LMF network element calculates a location of a to-be-positioned target based on a measurement result obtained by using the UL-TDOA technology. To be specific, FIG. 6 is a diagram for trilateral positioning according to an embodiment of this application. A target location may be estimated by calculating an intersection point of hyperbolic curves. First, it is assumed that locations of three base stations are known. Herein, coordinates of an $i^{th}$ base station are defined as $(x_i, y_i)$, coordinates of a to-be-positioned target are defined as $(x_{UE}, y_{UE})$, and one of the base stations is used as a reference base station. It is Assumed that time of arrival of an SRS measured by the other two base stations is $t_i$, a time difference of arrival between any base station and the reference base station is $\Delta t_{i1}$. According to a definition of a hyperbolic curve (a distance between two fixed points is a constant), when the target is on a hyperbolic curve with two base stations as focuses, the following equations may be listed:

$$\sqrt{(x_1 - x_{UE})^2 + (y_1 - y_{UE})^2} - \sqrt{(x_2 - x_{UE})^2 + (y_2 - y_{UE})^2} = c * \Delta t_{21} \qquad (1)$$

$$\sqrt{(x_1 - x_{UE})^2 + (y_1 - y_{UE})^2} - \sqrt{(x_3 - x_{UE})^2 + (y_3 - y_{UE})^2} = c * \Delta t_{31} \qquad (2)$$

In the foregoing two equations, c is the speed of light, and there are only two unknown numbers $(x_{UE}, y_{UE})$. Therefore, location coordinates of the target terminal can be obtained by combining the equation (1) and the equation (2). Actually, due to existence of a measurement error, the foregoing equation usually does not have a closed-form solution, and a classical optimization algorithm like a least square algorithm or a particle swarm filter algorithm is used in engineering to estimate an optimal solution of the foregoing equation.

It can be found from the foregoing positioning procedure and positioning method that, a precondition for implementing a positioning function is that a receiving party and a sending party need to coordinate to measure a positioning reference signal, so as to obtain a related measurement result for subsequent positioning calculation. It should be noted herein that a terminal needs to receive positioning reference signals sent by a plurality of base stations. These positioning reference signals may be from a serving base station (the primary base station shown in FIG. 6) or may be from a non-serving base station (the neighboring base station shown in FIG. 6). As shown in FIG. 5, at the beginning of the positioning procedure, the LMF collects positioning reference signal configuration information of all base stations, and then sends the positioning reference signal configuration information of all the base stations to the terminal by using long term evolution positioning protocol (LTE positioning protocol, LPP) signaling. Therefore, the terminal learns of sending time and specific configuration information of all positioning reference signals, and then performs blind detection for the different positioning reference signals based on the configuration information, and records information such as detection time.

Actually, positioning accuracy is closely related to a bandwidth of a positioning reference signal. A larger bandwidth indicates a higher timing resolution (which affects accuracy of searching for a 1st path), and a higher multipath differentiating capability indicates more accurate identification of time of arrival of the 1st path. In this case, a location estimation error is reduced. Table 1 lists simulation results of positioning accuracy in different bandwidths.

Table 1

| Bandwidth (MHz) | Positioning accuracy (m) 50% | Positioning accuracy (m) 67% | Positioning accuracy (m) 80% | Positioning accuracy (m) 90% |
|---|---|---|---|---|
| 10 | 1.056 | 1.621 | 2.430 | 4.100 |
| 40 | 0.158 | 0.262 | 0.414 | 0.751 |
| 100 | 0.036 | 0.062 | 0.102 | 0.186 |
| 200 | 0.010 | 0.017 | 0.033 | 0.082 |

The preceding table lists the simulation evaluation results of positioning accuracy in an indoor factory scenario, and a high-accuracy resolution algorithm is used. It can be learned from the foregoing table that, a larger bandwidth of the positioning reference signal indicates higher positioning accuracy. Actually, in an existing 3GPP standard protocol, in a low frequency band, a maximum bandwidth of one carrier is only 100 MHz, which means that a bandwidth of a positioning reference signal can reach at most 100 MHz, and positioning accuracy can also stay at an accuracy magnitude corresponding to 100 MHz. Therefore, to further improve positioning accuracy of 5G NR positioning, the 3GPP standard organization proposes a research topic of large-bandwidth positioning based on intra-band carrier aggregation (intra-band CA) (that is, carrier aggregation in a band (band)) in evolution of the R18 standard. In other words, positioning reference signals on a plurality of carriers are jointly processed to form a larger bandwidth, for example, two 100 MHz bandwidths are formed into a 200 MHz bandwidth, to implement higher positioning accuracy.

In addition, as shown in FIG. 5, the positioning reference signal is configured by the positioning server for the terminal, and both a bandwidth and a frequency domain location of the positioning reference signal are configurable. FIG. 7 is a diagram of a frequency domain location of a positioning reference signal during CA positioning according to an embodiment of this application. CA of two CCs is used as an example herein (actually, more CCs may be used for CA positioning, and the two CCs herein are two adjacent CCs for CA positioning). Two positioning reference signals used for CA positioning are respectively located on the two CCs, the PRS 1 is located at the bottom of a frequency domain of the CC 1, and the PRS 2 is located at the top of a frequency domain of the CC 2. The terminal simultaneously processes the PRSs on the two CCs, and combines the PRSs into a large-bandwidth PRS for positioning.

In the conventional technology, the terminal may support CA communication, that is, the terminal supports data communication on a plurality of CCs. In addition, the protocol defines a bandwidth limit during CA communication, that is, specifies a maximum value of a channel spacing between different CCs, as shown in Formula 3:

$$\text{Nominal channel spacing} = \left\lfloor \frac{BW_{Channel(1)} + BW_{Channel(2)} - 2\left|GB_{Channel(1)} - GB_{Channel(2)}\right|}{0.6} \right\rfloor 0.3\,[\text{MHz}] \qquad (3)$$

In the preceding formula, $BW_{Channel(1)}$ and $BW_{Channel(2)}$ indicate bandwidths of the two CCs, and $GB_{Channel(i)}$ indicates a guard band size of the bandwidth corresponding to each CC. The guard band size can be obtained from the protocol based on a bandwidth size of the CC. As shown in FIG. 1, the channel spacing herein actually refers to a spacing between center frequencies of two CCs.

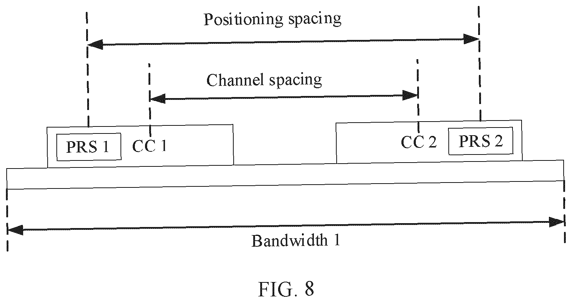

As described above, a channel spacing for existing CA communication defines a spacing between center frequencies of two adjacent CCs. For CA positioning, a positioning reference signal for CA positioning may be at any location of the CC, as shown in FIG. 7. In other words, a channel spacing defined based on CA communication is different from an actual positioning spacing (positioning spacing) for CA positioning. FIG. 8 is a diagram of an example of a channel spacing and a positioning spacing according to an embodiment of this application.

Another difference between CA positioning and CA communication lies in that for CA communication, a terminal may receive data on different CCs through different channels, and then perform demodulation and decoding separately. However, for CA positioning, a terminal needs to jointly process positioning reference signals on a plurality of CCs, to achieve large-bandwidth positioning effect. If the terminal separately receives positioning reference signals on different CCs through different receive channels, a delay difference between different channels and a random phase jump between channels are caused. As a result, a large-bandwidth positioning reference signal obtained by the terminal through combination carries a phase error, affecting accuracy of the CA positioning. Therefore, to avoid an extra channel delay and a phase jump error, it is usually expected that a receive end receives positioning reference signals on a plurality of CCs through one receive channel.

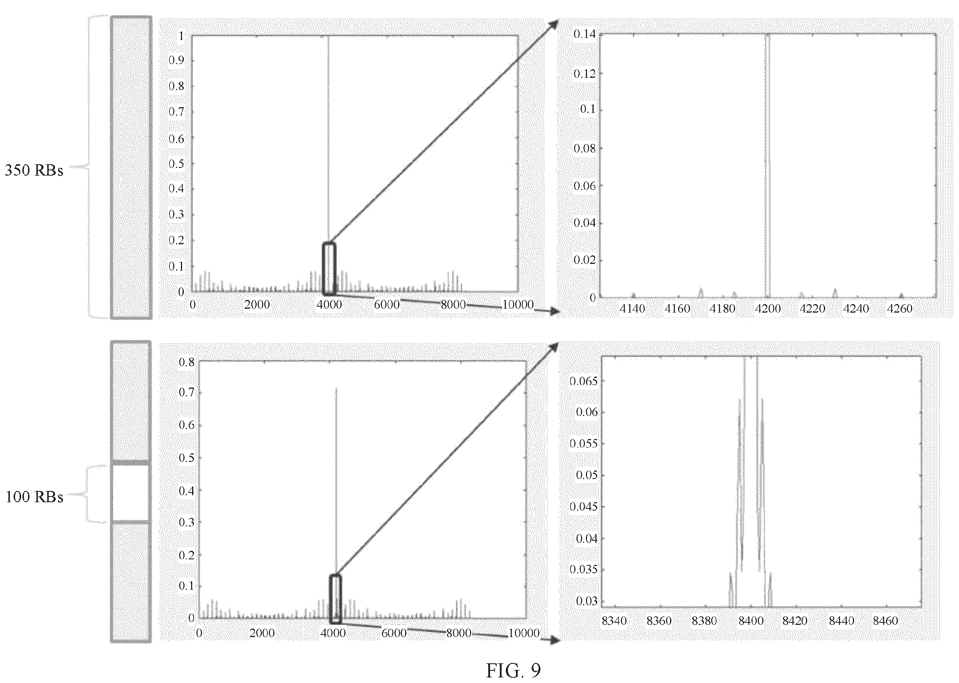

However, if the terminal receives positioning reference signals on a plurality of CCs through one receive channel, because there are gaps between the plurality of positioning reference signals, and sizes of the gaps may also change, positioning accuracy is affected by the sizes of the gaps (for example, a gap between the PRS 1 and the PRS 2). When a related operation is performed on a frequency domain spacing in time domain, a size and a shape of a correlation peak are affected. FIG. 9 is a diagram of an example of an autocorrelation function for PRSs with different frequency domain spacings in time domain according to an embodiment of this application. The lower left corner in the figure shows an autocorrelation function of a positioning reference signal in time domain when the positioning reference signal is continuously mapped in frequency domain. It can be seen that there is no other side lobe near a maximum peak of the autocorrelation function (as shown in the local enlarged diagram in the upper left corner). However, in the lower right corner, when the positioning reference signal is separately mapped (which is similar to mapping on different CCs), an additional side lobe appears near a maximum peak (as shown in the local enlarged diagram in the upper right corner). For a time-of-arrival-based positioning technology, a 1st peak is usually used as a 1st path, and time of the 1st peak is used as time of arrival of the 1st path. However, due to existence of a plurality of paths, the 1st path does not always correspond to a maximum peak, or in other words, a peak of the 1st path may not be greatly different from a peak of another path. In this case, if a side lobe (secondary peak) occurs in a correlation peak, determining of the 1st path is greatly affected, and even causing incorrect determining of the 1st path, and finally, TOA estimation accuracy and positioning accuracy are affected. In addition, a size of a side lobe is related to a size of a positioning spacing and a proportion of the positioning spacing in an entire positioning bandwidth. Preliminary research shows that a larger proportion of a positioning spacing indicates a higher side lobe, which indicates less significant difference from a main lobe (main peak).

As described above, a size of a gap between positioning reference signals affects a side lobe size of a correlation peak, and further affects positioning accuracy. Therefore, for a problem that positioning accuracy is affected when joint positioning is performed by using a plurality of reference signals and a gap between two adjacent reference signals is excessively large, embodiments of this application provide a positioning configuration solution. A gap between a first reference signal and a second reference signal that are for joint positioning may be flexibly set. Information about the gap between the first reference signal and the second reference signal that are for joint positioning is obtained, so that the first reference signal and the second reference signal can be properly configured based on the gap information, thereby improving positioning accuracy.

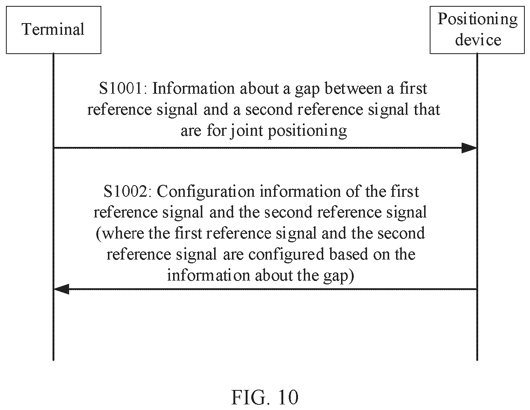

FIG. 10 is a schematic flowchart of a positioning configuration method according to an embodiment of this application. For example, the method may include the following steps.

S1001: A terminal reports information about a gap between a first reference signal and a second reference signal that are for joint positioning.

In this embodiment, CA positioning may be performed, that is, as shown in FIG. 7, the first reference signal and the second reference signal are respectively located on two adjacent CCs. The terminal may perform positioning based on reference signals on two or more CCs. The first reference signal and the second reference signal herein are respectively located on any two adjacent CCs on the two or more CCs.

For downlink CA positioning, the first reference signal and the second reference signal may be positioning reference signals such as PRSs.

The foregoing describes a solution that is in a scenario or on basis of existing CA communication. To be specific, a positioning reference signal is still configured in a CC. However, in view of particularity of a positioning function and a requirement of a reception algorithm of CA positioning for correlation reception or special processing, decoupling between CA communication and CA positioning may also be supported, that is, the terminal does not support CA communication, but can support CA positioning, which is alternatively referred to as joint positioning. Therefore, the solution in the embodiments may not only be used in an existing CA communication mechanism, but also be used in a scenario in which there is only CA positioning, that is, a PRS may not be on a CC, and the information about the gap between the first reference signal and the second reference signal that is reported by the terminal is completely not affected by the data gap.

The terminal may report, based on a capability of the terminal, the information about the gap between the first reference signal and the second reference signal that are for joint positioning. The gap (gap) between the first reference signal and the second reference signal that are for joint positioning may also be referred to as a positioning spacing (positioning spacing), or a positioning channel spacing (positioning channel spacing).

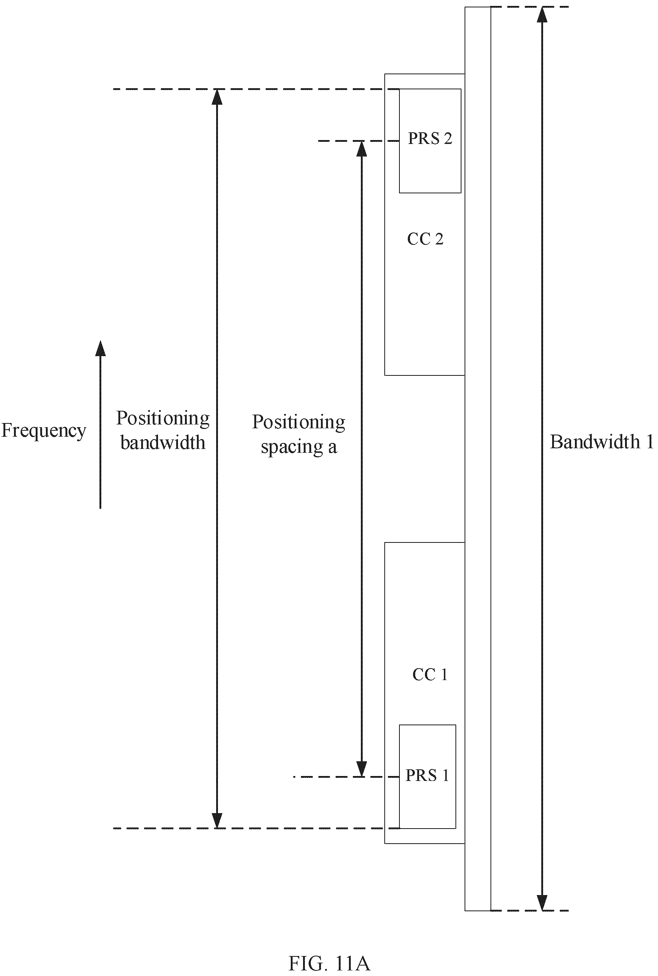

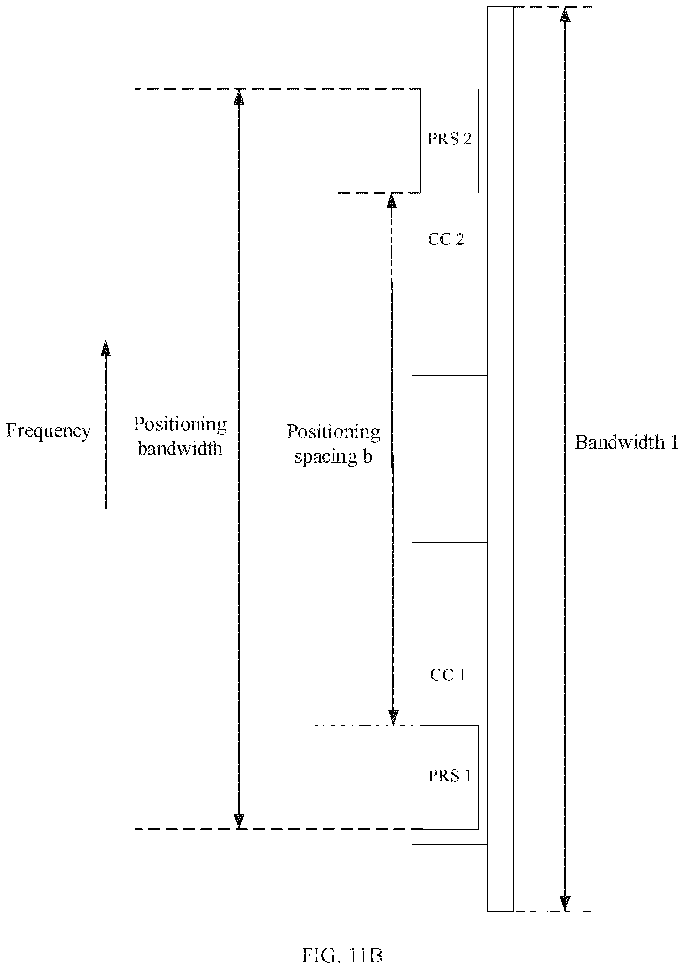

In an implementation, the gap between the first reference signal and the second reference signal may be a spacing between a center frequency of the first reference signal and a center frequency of the second reference signal. FIG. 11A and FIG. 11B are a diagram of examples of positioning spacings according to an embodiment of this application. Specifically, in FIG. 11A, in terms of frequency domain location, a CC 1 is below a CC 2 in frequency domain. A PRS 1 is at a lower end of a frequency domain of the CC 1, and a PRS 2 is at an upper end of a frequency domain of the CC 2. A gap between the PRS 1 and the PRS 2 is a positioning spacing a between a center frequency of the PRS 1 and a center frequency of the PRS 2. A positioning bandwidth is a spacing between a minimum frequency domain location of the PRS 1 and a maximum frequency domain location of the PRS 2.

In another implementation, the gap between the first reference signal and the second reference signal may be a spacing between a minimum frequency domain location of the first reference signal and a maximum frequency domain location of the second reference signal. Still refer to FIG. 11A and FIG. 11B. In FIG. 11B, a CC 1 is below a CC 2 in frequency domain. A PRS 1 is at a lower end of a frequency domain of the CC 1, and a PRS 2 is at an upper end of a frequency domain of the CC 2. A gap between the PRS 1 and the PRS 2 is a positioning spacing b between a minimum frequency domain location of the PRS 2 and a maximum frequency domain location of the PRS 1. A positioning bandwidth is a spacing between a minimum frequency domain location of the PRS 1 and a maximum frequency domain location of the PRS 2.

In the second implementation, the minimum frequency domain location of the first reference signal may also be referred to as a lower limit of a frequency band corresponding to the first reference signal, and the maximum frequency domain location of the second reference signal may also be referred to as an upper limit of a frequency band corresponding to the second reference signal. Therefore, in still another implementation, the gap between the first reference signal and the second reference signal may be a spacing between the lower limit of the frequency band corresponding to the first reference signal and the upper limit of the frequency band corresponding to the second reference signal.

In the second implementation, the first reference signal has the minimum frequency domain location and a granularity of the frequency domain location may be a subcarrier. Therefore, the minimum frequency domain location of the first reference signal may be a location of a 1$^{st}$ subcarrier of the first reference signal, and the maximum frequency domain location of the second reference signal may be a location of a last subcarrier of the second reference signal. Therefore, in yet another implementation, the gap between the first reference signal and the second reference signal may be a spacing between the location of the 1$^{st}$ subcarrier of the first reference signal and the location of the last subcarrier of the second reference signal.

There may be the following implementations in which the terminal reports the information about the gap between the first reference signal and the second reference signal that are for joint positioning.

In an implementation, the terminal may report a maximum gap between the first reference signal and the second reference signal. The maximum gap between the first reference signal and the second reference signal may be represented as a bandwidth between the first reference signal and the second reference signal, or a maximum quantity of resource blocks (resource block, RB) between the first reference signal and the second reference signal.

For example, the terminal may report the gap information by using radio resource control (radio resource control, RRC) signaling. A format of reporting the capability of the terminal about the foregoing gap information in the RRC signaling may be shown in Table 2:

Table 2

| Terminal capability type (Feature group) | Capability content (Components) | Need of FDD/TDD system differentiation for separate reporting (Need of FDD/TDD differentiation) | Need of differentiation between low and high frequency bands (Need of FR 1/FR 2 differentiation) | Type (Type) | Note (Note) |
|---|---|---|---|---|---|
| Maximum gap for CA PRS positioning (Max GAP for CA PRS positioning) | Support a maximum gap between two PRSs on two CCs for CA positioning (Support maximum GAP between two PRSs on two CCs for CA positioning) | No | No | Per bandwidth (Per band)/- Per bandwidth combination (Per BC (band combination)) | Bandwidth candidates: {5 MHz, 10 MHz, 20 MHz, 40 MHz, 50 MHz, 100 MHz}; or candidates with a maximum RB: {10 RBs, 20 RBs, 50 RBs, 100 RBs, 200 RBs, 400 RBs} |

In Table 2, the maximum gap between the first reference signal and the second reference signal may be represented as a bandwidth between the first reference signal and the second reference signal, and the terminal reports some candidate values of the bandwidth: 5 MHz, 10 MHz, 20 MHz, 40 MHz, 50 MHz, 100 MHz, and the like. A positioning device may determine frequency domain locations of the first reference signal and the second reference signal based on the maximum gap reported by the terminal, so that the gap between the first reference signal and the second reference signal is less than or equal to the maximum gap.

In Table 2, the maximum gap between the first reference signal and the second reference signal may alternatively be represented as a maximum quantity of resource blocks between the first reference signal and the second reference signal, and the terminal reports some candidate values of the maximum quantity of resource blocks: 10 RBs, 20 RBs, 50 RBs, 100 RBs, 200 RBs, 400 RBs, and the like. A positioning device may determine frequency domain locations of the first reference signal and the second reference signal based on the maximum quantity of resource blocks reported by the terminal, so that a quantity of resource blocks in the gap between the first reference signal and the second reference signal is less than or equal to the maximum quantity of resource blocks. For example, if the maximum positioning spacing reported by the terminal is 50 RBs, when the positioning device configures the positioning reference signal, a positioning spacing between the configured first reference signal and second reference signal cannot exceed 50 RBs.

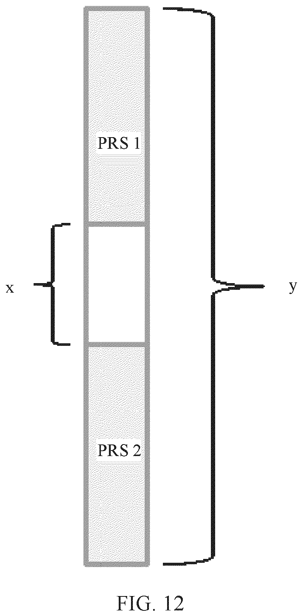

In another implementation, the terminal may report a proportion of the gap between the first reference signal and the second reference signal in a positioning bandwidth. The positioning bandwidth is a spacing between a maximum frequency domain location of the first reference signal and a minimum frequency domain location of the second reference signal. FIG. 12 is a diagram of an example of a positioning spacing and a positioning bandwidth according to an embodiment of this application. x is a gap (specifically a frequency domain spacing) between a PRS 1 and a PRS 2 that are for joint positioning, and y is a positioning bandwidth between the PRS 1 and the PRS 2 that are for joint positioning (including bandwidths of the PRS 1 and the PRS 2 and a positioning spacing between the PRS 1 and the PRS 2). The terminal reports a value of x/y.

The terminal may report the foregoing proportion by using RRC signaling. A format of reporting the capability of the terminal about the foregoing proportion in the RRC signaling may be shown in Table 3:

Table 3

| Terminal capability type (Feature group) | Capability content (Components) | Need of FDD/TDD system differentiation for separate reporting (Need of FDD/TDD differentiation) | Need of differentiation between low and high frequency bands (Need of FR 1/FR 2 differentiation) | Type (Type) | Note (Note) |
|---|---|---|---|---|---|
| Ratio of a positioning spacing in an entire CA bandwidth (Ratio of GAP in the entire CA bandwidth) | Support a maximum proportion of a PRS positioning spacing in an entire CA bandwidth (Support maximum proportion of PRS gap in bandwidth of CA (ratio=x/y)) | No | No | Per terminal (Per UE)/Per bandwidth (Per band)/-Per bandwidth combination (Per BC) | Candidate values: {0.1,0.2, 0.3, 0.4, 0.5, 0.6, 0.7, 0.8, 0.9} |

According to Table 3, the terminal reports some candidate values of the proportion of the positioning spacing in the positioning bandwidth, and the positioning device may determine frequency domain locations of the first reference signal and the second reference signal based on the proportion of the positioning spacing in the positioning bandwidth reported by the terminal, so that the proportion of the positioning spacing in the positioning bandwidth is less than or equal to the candidate values. For example, if the proportion reported by the terminal is 0.5, the proportion of the gap that is configured by the positioning device and that is between the first reference signal and the second reference signal in the positioning bandwidth of the entire positioning reference signal should be less than 0.5.

S1002: After receiving the gap information, the positioning device sends configuration information of the first reference signal and the second reference signal to the terminal, where the first reference signal and the second reference signal are configured based on the information about the gap between the first reference signal and the second reference signal.

Correspondingly, the terminal receives the configuration information.

After receiving the gap information, the positioning device configures the frequency domain location of the first reference signal and the frequency domain location of the second reference signal. The actually configured gap between the first reference signal and the second reference signal being less than the positioning spacing is a condition for the terminal to meet an accuracy indicator.

The configuration information includes the frequency domain location of the first reference signal, the frequency domain location of the second reference signal, and the like. For details, refer to the conventional technology.

Further, after receiving the configuration information, the terminal may receive a PRS sent by an access network device, measure the PRS, and report a measurement result to the positioning device. The positioning device performs location estimation based on the reported measurement result. For details, refer to the descriptions in FIG. 5.

According to the positioning configuration method provided in this embodiment of this application, the gap between the first reference signal and the second reference signal that are for joint positioning may be flexibly set. The terminal reports, to the positioning device, the information about the gap between the first reference signal and the second reference signal that are for joint positioning, so that the positioning device can properly configure the first reference signal and the second reference signal based on the information about the gap, thereby avoiding a problem of poor positioning accuracy caused by an excessively large positioning spacing, and improving positioning accuracy.

In addition, a large positioning spacing may be configured as much as possible while positioning accuracy. In this way, the terminal and another terminal may use more resources corresponding to the positioning spacing for data transmission, thereby reducing interference between terminals and improving resource utilization.

In the conventional technology, it is not considered that positioning reference signals in a plurality of cells may be at different locations during CA positioning. As a result, a spacing during CA positioning is inconsistent with a spacing during CA communication. However, the solution in this embodiment avoids a problem of poor positioning accuracy caused by configuring a positioning spacing to be excessively large.

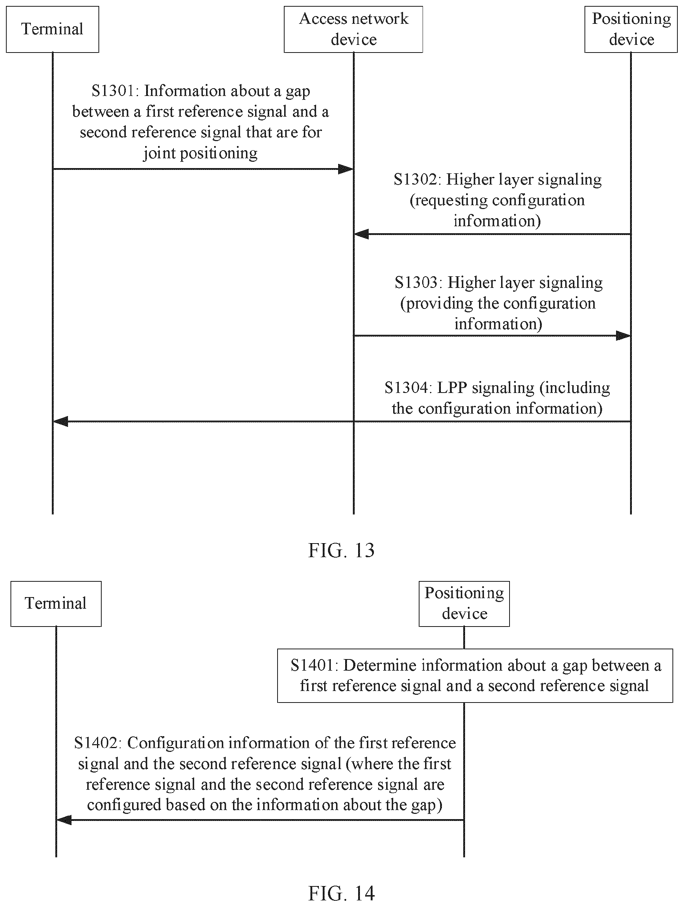

FIG. 13 is a schematic flowchart of another positioning configuration method according to an embodiment of this application. For example, the method may include the following steps.

S1301: A terminal reports information about a gap between a first reference signal and a second reference signal that are for joint positioning.

For specific implementation of this step, refer to step S1001 in the foregoing embodiment. A difference lies in that in this embodiment, the terminal reports the gap information to an access network device.

S1302: A positioning device sends higher layer signaling to the access network device, where the higher layer signaling is used to request configuration information of the first reference signal and the second reference signal.

The access network device stores the configuration information of the positioning reference signal of the terminal served by the access network device. When the positioning device needs to position the terminal, the positioning device may obtain the configuration information of the first reference signal and the second reference signal from the access network device. The configuration information may be generated based on the reported gap information and the like.

S1303: The access network device receives the higher layer signaling, where the higher layer signaling is used to provide the configuration information of the first reference signal and the second reference signal for the positioning device.

S1304: After receiving the configuration information, the positioning device sends the configuration information of the first reference signal and the second reference signal to the terminal.

The configuration information sent by the positioning device to the terminal may be the same as the configuration information received by the positioning device from the access network device, or may be configuration information obtained through processing of the configuration information received by the positioning device from the access network device.

For specific implementation of this step, refer to step S1002 in the foregoing embodiment.

Further, after receiving the configuration information, the terminal may receive a PRS sent by the access network device, measure the PRS, and report a measurement result to the positioning device. The positioning device performs location estimation based on the reported measurement result. For details, refer to the descriptions in FIG. 5.

According to the positioning configuration method provided in this embodiment of this application, the gap between the first reference signal and the second reference signal that are for joint positioning may be flexibly set. The terminal reports, to the access network device, the information about the gap between the first reference signal and the second reference signal that are for joint positioning, and the access network device forwards the information about the gap to the positioning device, so that the positioning device can properly configure the first reference signal and the second reference signal based on the information about the gap, thereby improving positioning accuracy.

FIG. 14 is a schematic flowchart of still another positioning configuration method according to an embodiment of this application. For example, the method may include the following steps.

S1401: A positioning device determines information about a gap between a first reference signal and a second reference signal that are for joint positioning.

In this embodiment, the positioning spacing may be defined in the protocol, as shown in Formula 4:

$$\text{Positioning spacing} = \left\lceil \frac{BW_{PRS1} + BW_{PRS2} - 2|GB_{Channel(1)} - GB_{channel(2)}|}{\alpha} \right\rceil \beta \qquad (4)$$

In the foregoing formula, $BW_{PRS1}$ is a bandwidth of the first reference signal PRS 1, $BW_{PRS2}$ is a bandwidth of the second reference signal PRS 2, $GB_{Channel(i)}$ is a size of a minimum guard band of a CC on which a PRS i is located, and $\alpha$ and $\beta$ are scaling coefficients, which can flexibly adjust a size of the positioning spacing.

For a meaning of the positioning spacing, refer to the descriptions in the foregoing embodiment, and details are not described herein again.

The positioning device may pre-store the gap information. The size of the gap of the positioning reference signal during CA positioning is limited in the protocol, so that resources for reporting are reduced and a signaling procedure is simplified.

S1402: The positioning device sends configuration information of the first reference signal and the second reference signal to a terminal, where the first reference signal and the second reference signal are configured based on the information about the gap between the first reference signal and the second reference signal.

For specific implementation of this step, refer to step S1002 in the foregoing embodiment. Details are not described herein again.

According to the positioning configuration method provided in this embodiment of this application, the gap between the first reference signal and the second reference signal that are for joint positioning may be flexibly set. The positioning device determines the information about the gap between the first reference signal and the second reference signal that are for joint positioning, so that the first reference signal and the second reference signal can be properly configured based on the information about the gap, thereby improving positioning accuracy.

In the conventional technology, only a channel spacing for CA communication is defined, but a channel spacing for CA positioning cannot be measured or replaced by the channel spacing for CA communication. Therefore, this embodiment provides a calculation manner for a positioning channel spacing, and a meaning and a purpose of a positioning channel, thereby avoiding a positioning accuracy problem caused by an excessively large spacing during CA positioning.

The embodiments shown in FIG. 10, FIG. 13, and FIG. 14 are described by using downlink positioning as an example. To be specific, the access network device sends the first reference signal and the second reference signal to the terminal, and the positioning device performs positioning based on a result of measuring the first reference signal and the second reference signal by the terminal. The foregoing embodiment may also be used for uplink joint positioning (for example, uplink CA positioning). To be specific, the terminal may simultaneously send a positioning reference signal (for example, an SRS) to the access network device on a plurality of CCs through a same radio frequency channel. The access network device measures the positioning reference signal, and sends a measurement result to the positioning device. The positioning device performs positioning on the terminal based on the measurement result. To prevent the gap between the first reference signal and the second reference signal configured by the access network device from exceeding a processing capability of the terminal, the terminal may also report the information about the gap between the first reference signal and the second reference signal, or the information about the gap between the first reference signal and the second reference signal that are for uplink joint positioning may be defined in a protocol.

There may be the following implementations in which the terminal reports the information about the gap between the first reference signal and the second reference signal that are for joint positioning.

In an implementation, the terminal may report a maximum gap between the first reference signal and the second reference signal. The maximum gap between the first reference signal and the second reference signal may be represented as a bandwidth between the first reference signal and the second reference signal, or a maximum quantity of resource blocks (resource block, RB) between the first reference signal and the second reference signal.

For example, the terminal may report the gap information by using RRC signaling. A format of reporting the capability of the terminal about the foregoing gap information in the RRC signaling may be shown in Table 4:

Table 4

| Terminal capability type (Feature group) | Capability content (Components) | Need of FDD/TDD system differentiation for separate reporting (Need of FDD/TDD differentiation) | Need of differentiation between low and high frequency bands (Need of FR 1/FR 2 differentiation) | Type (Type) | Note (Note) |
|---|---|---|---|---|---|
| Maximum gap for CA SRS positioning (Max GAP for CA SRS positioning) | Support a maximum gap between two SRSs on two CCs for CA positioning (Support maximum GAP between two SRSs on two CCs for CA positioning) | No | No | Per bandwidth (Per band)/- Per bandwidth combination (Per BC (band combination)) | Bandwidth candidates: {5 MHz, 10 MHz, 20 MHz, 40 MHz, 50 MHz, 100 MHz}; or candidates with a maximum RB: {10 RBs, 20 RBs, 50 RBs, 100 RBs, 200 RBs, 400 RBs} |

In Table 4, the maximum gap between the first reference signal and the second reference signal may be represented as a bandwidth between the first reference signal and the second reference signal, and the terminal reports some candidate values of the bandwidth: 5 MHz, 10 MHz, 20 MHz, 40 MHz, 50 MHz, 100 MHz, and the like. The access network device may determine frequency domain locations of the first reference signal and the second reference signal based on the maximum gap reported by the terminal, so that the gap between the first reference signal and the second reference signal is less than or equal to the maximum gap.

In Table 4, the maximum gap between the first reference signal and the second reference signal may alternatively be represented as a maximum quantity of resource blocks between the first reference signal and the second reference signal, and the terminal reports some candidate values of the maximum quantity of resource blocks: 10 RBs, 20 RBs, 50 RBs, 100 RBs, 200 RBs, 400 RBs, and the like. The access network device may determine frequency domain locations of the first reference signal and the second reference signal based on the maximum quantity of resource blocks reported by the terminal, so that a quantity of resource blocks in the gap between the first reference signal and the second reference signal is less than or equal to the maximum quantity of resource blocks. For example, if the maximum positioning spacing reported by the terminal is 50 RBs, when the access network device configures the positioning reference signal, a positioning spacing between the configured first reference signal and second reference signal cannot exceed 50 RBs.

In another implementation, the terminal may report a proportion of the gap between the first reference signal and the second reference signal in a positioning bandwidth. The positioning bandwidth is a spacing between a maximum frequency domain location of the first reference signal and a minimum frequency domain location of the second reference signal. For example, w is a gap (specifically a frequency domain spacing) between an SRS 1 and an SRS 2 that are for joint positioning, and z is positioning bandwidth (including bandwidths of the SRS 1 and the SRS 2 and a positioning spacing between the SRS 1 and the SRS 2) between the SRS 1 and the SRS 2 that are for joint positioning. The terminal reports a value of w/z.

The terminal may report the foregoing proportion by using RRC signaling. A format of reporting the capability of the terminal about the foregoing proportion in the RRC signaling may be shown in Table 5:

Table 5

| Terminal capability type (Feature group) | Capability content (Components) | Need of FDD/TDD system differentiation for separate reporting (Need of FDD/TDD differentiation) | Need of differentiation between low and high frequency bands (Need of FR 1/FR 2 differentiation) | Type (Type) | Note (Note) |
|---|---|---|---|---|---|
| Ratio of a positioning spacing in an entire CA bandwidth (Ratio of GAP in the entire CA bandwidth) | Support a maximum proportion of an SRS positioning spacing in an entire CA bandwidth (Support maximum proportion of SRS gap in bandwidth of CA (ratio=x/y)) | No | No | Per terminal (Per UE)/Per bandwidth (Per band)/-Per bandwidth combination (Per BC) | Candidate values: {0.1, 0.2, 0.3, 0.4, 0.5, 0.6, 0.7, 0.8, 0.9} |

According to Table 5, the terminal reports some candidate values of the proportion of the positioning spacing in the positioning bandwidth, and the access network device may determine frequency domain locations of the first reference signal and the second reference signal based on the proportion of the positioning spacing in the positioning bandwidth reported by the terminal, so that the proportion of the positioning spacing in the positioning bandwidth is less than or equal to the candidate values. For example, if the proportion reported by the terminal is 0.5, the proportion of the gap that is configured by the access network device and that is between the first reference signal and the second reference signal in the positioning bandwidth of the entire positioning reference signal should be less than 0.5.

According to the positioning configuration method provided in this embodiment of this application, the gap between the first reference signal and the second reference signal that are for joint positioning may be flexibly set. The terminal reports, to the access network device, the information about the gap between the first reference signal and the second reference signal that are for joint positioning, so that the access network device can properly configure the first reference signal and the second reference signal based on the information about the gap, thereby avoiding a problem of poor positioning accuracy caused by an excessively large positioning spacing, and improving positioning accuracy.

In addition, a large positioning spacing may be configured as much as possible while ensuring positioning accuracy. In this way, the terminal and another terminal may use more resources corresponding to the positioning spacing for data transmission, thereby reducing interference between terminals and improving resource utilization.

In the conventional technology, it is not considered that positioning reference signals in a plurality of cells may be at different locations during CA positioning. As a result, a spacing during CA positioning is inconsistent with a spacing during CA communication. However, the solution in this embodiment avoids a problem of poor positioning accuracy caused by configuring a positioning spacing to be excessively large.

It may be understood that, to implement functions in the foregoing embodiments, the terminal, the access network device, and the positioning device include corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

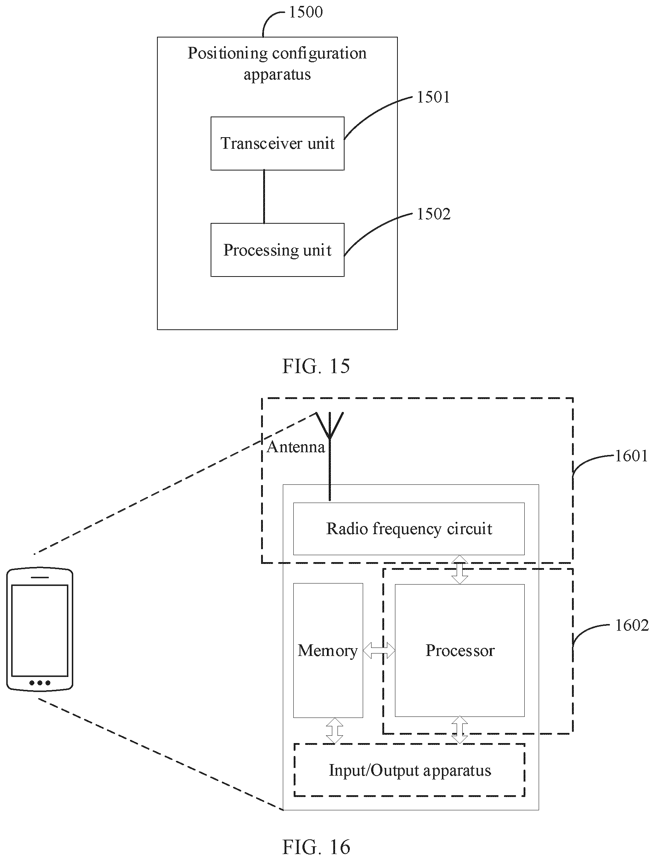

FIG. 15 to FIG. 18 are diagrams of structures of possible positioning configuration apparatuses according to embodiments of this application. These positioning configuration apparatuses may be configured to implement functions of the terminal, the access network device, or the positioning device in the foregoing method embodiments, and therefore can also implement beneficial effects of the foregoing method embodiments.

FIG. 15 is a diagram of a structure of a positioning configuration apparatus according to an embodiment of this application. The positioning configuration apparatus 1500 includes a transceiver unit 1501 and a processing unit 1502.

When the positioning configuration apparatus is configured to implement functions of the terminal in the embodiment shown in FIG. 10, the transceiver unit 1501 is configured to perform functions performed by the terminal in steps S1001 and S1002 in the embodiment shown in FIG. 10.

When the positioning configuration apparatus is configured to implement functions of the positioning device in the embodiment shown in FIG. 10, the transceiver unit 1501 is configured to perform functions performed by the positioning device in steps S1001 and S1002 in the embodiment shown in FIG. 10.

When the positioning configuration apparatus is configured to implement functions of the terminal in the embodiment shown in FIG. 13, the transceiver unit 1501 is configured to perform functions performed by the terminal in steps S1301 and S1304 in the embodiment shown in FIG. 13.

When the positioning configuration apparatus is configured to implement functions of the access network device in the embodiment shown in FIG. 13, the transceiver unit 1501 is configured to perform functions performed by the access network device in steps S1301 to S1303 in the embodiment shown in FIG. 13.

When the positioning configuration apparatus is configured to implement functions of the positioning device in the embodiment shown in FIG. 13, the transceiver unit 1501 is configured to perform functions performed by the positioning device in steps S1301 to S1304 in the embodiment shown in FIG. 13.

When the positioning configuration apparatus is configured to implement a function of the terminal in the embodiment shown in FIG. 14, the transceiver unit 1501 is configured to perform a function performed by the terminal in step S1402 in the embodiment shown in FIG. 14.

When the positioning configuration apparatus is configured to implement a function of the positioning device in the embodiment shown in FIG. 14, the processing unit 1502 is configured to perform step S1401 in the embodiment shown in FIG. 14, and the transceiver unit 1501 is configured to perform a function performed by the positioning device in step S1402 in the embodiment shown in FIG. 14.

According to the positioning configuration apparatus provided in this embodiment of this application, a gap between a first reference signal and a second reference signal that are for joint positioning may be flexibly set. Information about the gap between the first reference signal and the second reference signal that are for joint positioning is obtained, so that the first reference signal and the second reference signal can be properly configured based on the information about the gap, thereby improving positioning accuracy.

FIG. 16 is a simplified diagram of a structure of a terminal. For ease of understanding and illustration, an example in which the terminal is a mobile phone is used in FIG. 16. As shown in FIG. 16, the terminal includes a processor, a memory, a radio frequency circuit, an antenna, and an input/output apparatus. The processor is mainly configured to: process a communication protocol and communication data, control the terminal, execute a software program, process data of the software program, and the like. The memory is mainly configured to store the software program and data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user. For example, some types of terminals may not have the input/output apparatus.

When sending data, after performing baseband processing on the to-be-sent data, the processor outputs a baseband signal to the radio frequency circuit; and the radio frequency circuit performs radio frequency processing on the baseband signal and then sends a radio frequency signal to the outside in a form of an electromagnetic wave through the antenna. When data is sent to the terminal, the radio frequency circuit receives a radio frequency signal through the antenna, converts the radio frequency signal into a baseband signal, and outputs the baseband signal to the processor. The processor converts the baseband signal into data, and processes the data. For ease of description, only one memory and one processor are shown in FIG. 16. An actual terminal product may include one or more processors and one or more memories. The memory may also be referred to as a storage medium, a storage device, or the like. The memory may be disposed independent of the processor, or may be integrated with the processor. This is not limited in embodiments of this application.

In this embodiment of this application, an antenna and a radio frequency circuit that have receiving and sending functions may be considered as a receiving unit and a sending unit (or collectively referred to as a transceiver unit) of the terminal, and a processor that has a processing function is considered as a processing unit of the terminal. As shown in FIG. 16, the terminal includes a transceiver unit 1601 and a processing unit 1602. The transceiver unit 1601 may also be referred to as a receiver/transmitter (sender), a receiver/transmitter machine, a receiver/transmitter circuit, or the like. The processing unit 1602 may also be referred to as a processor, a processing board, a processing module, a processing apparatus, or the like. The transceiver unit 1601 is configured to implement a function of the transceiver unit 1501 in the embodiment shown in FIG. 15, and the processing unit 1602 is configured to implement a function of the processing unit 1502 in the embodiment shown in FIG. 15.

For example, in an embodiment, the transceiver unit 1601 is configured to perform functions performed by the terminal in steps S1001 and S1002 in the embodiment shown in FIG. 10.

For example, in another embodiment, the transceiver unit 1601 is configured to perform functions performed by the terminal in steps S1301 and S1304 in the embodiment shown in FIG. 13.

For example, in still another embodiment, the processing unit 1602 is configured to perform step S1401 in the embodiment shown in FIG. 14, and the transceiver unit 1601 is configured to perform a function performed by the terminal in step S1402 in the embodiment shown in FIG. 14.

The gap between the first reference signal and the second reference signal that are for joint positioning may be flexibly set. In this embodiment, the terminal reports the information about the gap between the first reference signal and the second reference signal that are for joint positioning, so that the positioning device can properly configure the first reference signal and the second reference signal based on the information about the gap, thereby improving positioning accuracy.

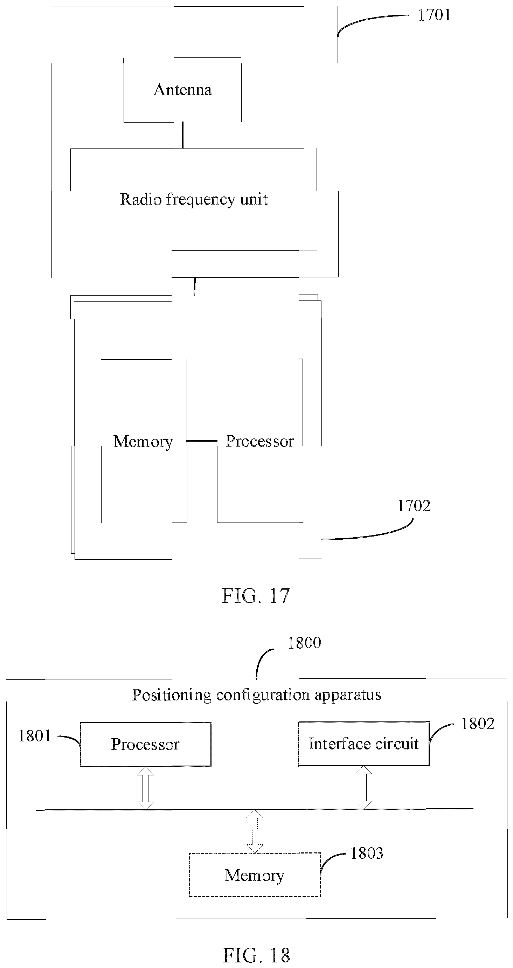

FIG. 17 is a simplified diagram of a structure of an access network device. The access network device includes a part for radio frequency signal receiving/sending and conversion and a part 1702, and the part for radio frequency signal receiving/sending and conversion further includes a transceiver unit part 1701. The part for radio frequency signal sending/receiving and conversion is mainly configured to send/receive a radio frequency signal and perform conversion between the radio frequency signal and a baseband signal. The part 1702 is mainly configured to perform baseband processing, control the access network device, and the like. The transceiver unit 1701 may also be referred to as a receiver/transmitter (sender), a receiver/transmitter machine, a receiver/transmitter circuit, or the like. The part 1702 is usually a control center of the access network device, may be usually referred to as a processing unit, and is configured to control the access network device to perform the steps performed by the access network device in FIG. 4. For details, refer to the foregoing descriptions of the related parts. The transceiver unit 1701 may be configured to implement a function of the transceiver unit 1501 in the embodiment shown in FIG. 15, and the part 1702 is configured to implement a function of the processing unit 1502 in the embodiment shown in FIG. 15.

The part 1702 may include one or more boards. Each board may include one or more processors and one or more memories. The processor is configured to read and execute a program in the memory to implement a baseband processing function and control the access network device. If there are a plurality of boards, the boards may be interconnected to improve a processing capability. In an optional implementation, the plurality of boards may share one or more processors, or the plurality of boards share one or more memories, or the plurality of boards share one or more processors at the same time.

For example, in an embodiment, the transceiver unit 1701 is configured to perform functions performed by the access network device in steps S1301 and S1302 in the embodiment shown in FIG. 13.

The gap between the first reference signal and the second reference signal that are for joint positioning may be flexibly set. The access network device in this embodiment receives information that is reported by a terminal and that is about the gap between the first reference signal and the second reference signal that are for joint positioning, and forwards the information about the gap to a positioning device, so that the positioning device can properly configure the first reference signal and the second reference signal based on the information about the gap, thereby improving positioning accuracy.

FIG. 18 is a diagram of a structure of another positioning configuration apparatus according to an embodiment of this application. The positioning configuration apparatus 1800 includes a processor 1801 and an interface circuit 1802. The processor 1801 and the interface circuit 1802 are coupled to each other. It may be understood that the interface circuit 1802 may be a transceiver or an input/output interface. Optionally, the positioning configuration apparatus 1800 may further include a memory 1803, configured to store instructions executed by the processor 1801, or store input data for the processor 1801 to run instructions, or store data generated after the processor 1801 runs instructions.

When the positioning configuration apparatus 1800 is configured to implement the method shown in FIG. 4, the processor 1801 is configured to implement a function of the processing unit 1502, and the interface circuit 1802 is configured to implement a function of the transceiver unit 1501.

When the positioning configuration apparatus is a chip used in a terminal, the chip is configured to implement functions of the terminal in the foregoing method embodiments. The chip receives information from another module (for example, a radio frequency module or an antenna) in the terminal, and the information is sent by an access network device or another device to the terminal. Alternatively, the chip sends information to another module (for example, a radio frequency module or an antenna) in the terminal, and the information is sent by the terminal to an access network device or another device.

When the positioning configuration apparatus is a chip used in an access network device, the chip is configured to implement a function of the access network device in the foregoing method embodiments. The chip receives information from another module (for example, a radio frequency module or an antenna) in the access network device, and the information is sent by a terminal or another device to the access network device. Alternatively, the chip sends information to another module (for example, a radio frequency module or an antenna) in the access network device, and the information is sent by the access network device to a terminal or another device.

When the positioning configuration apparatus is a chip used in a positioning device, the chip is configured to implement a function of the positioning device in the foregoing method embodiments. The chip receives information from another module (for example, a radio frequency module or an antenna) in the positioning device, and the information is sent by a terminal or another device to a terminal/access network device. Alternatively, the chip sends information to another module (for example, a radio frequency module or an antenna) in the positioning device, and the information is sent by the positioning device to a terminal, an access network device, or another device.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or any regular processor, or the like.

According to the positioning configuration apparatus provided in embodiments of this application, a gap between a first reference signal and a second reference signal that are for joint positioning may be flexibly set. Information about the gap between the first reference signal and the second reference signal that are for joint positioning is obtained, so that the first reference signal and the second reference signal can be properly configured based on the information about the gap, thereby improving positioning accuracy.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a compact disc read-only memory (compact disc read-only memory, CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a first node. Certainly, the processor and the storage medium may alternatively exist as discrete components in a terminal.

An embodiment of this application further provides a communication system, including the foregoing positioning configuration apparatus.

An embodiment of this application further provides a computer-readable storage medium. The computer-readable storage medium stores a computer program or instructions. When the program or the instructions are executed by a processor, the method according to the foregoing embodiments is performed.

An embodiment of this application further provides a computer program product. When the computer program product runs on a computing device, the method according to the foregoing embodiments is performed.

All or some of the foregoing embodiments may be implemented by software, hardware, firmware, or any combination thereof. When software is used to implement the embodiments, all or a part of the embodiments may be implemented in a form of a computer program product. The computer program product includes one or more computer programs or instructions. When the computer programs or the instructions are loaded and executed on a computer, all or a part of the processes or functions in embodiments of this application are performed. The computer may be a general-purpose computer, a dedicated computer, a computer network, a network device, a terminal, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape, may be an optical medium, for example, a digital video disc, or may be a semiconductor medium, for example, a solid-state drive.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. "And/or" describes an association relationship between associated objects, and indicates that three relationships may exist. For example, A and/or B may indicate the following cases: A exists alone, both A and B exist, and B exists alone, where A and B may be singular or plural. In the text descriptions of this application, the character "/" represents an "or" relationship between the associated objects. In a formula in this application, the character "/" represents a "division" relationship between the associated objects.

It may be understood that various numbers in embodiments of this application are merely used for differentiation for ease of description, and are not used to limit the scope of embodiments of this application. Sequence numbers of the foregoing processes do not mean an execution sequence, and the execution sequences of the processes should be determined based on functions and internal logic of the processes.

**Claims**

1. A positioning configuration method, wherein the method comprises:

   reporting information about a gap between a first reference signal and a second reference signal that are for joint positioning; and
   receiving configuration information of the first reference signal and the second reference signal, wherein the first reference signal and the second reference signal are configured based on the information about the gap between the first reference signal and the second reference signal.

2. The method according to claim 1, wherein the information about the gap between the first reference signal and the second reference signal comprises one of the following information: a maximum gap between the first reference signal and the second reference signal, and a proportion of the gap between the first reference signal and the second reference signal in a positioning bandwidth.

3. The method according to claim 2, wherein the gap between the first reference signal and the second reference signal is a spacing between a minimum frequency domain location of the first reference signal and a maximum frequency domain location of the second reference signal, or the gap between the first reference signal and the second reference signal is a spacing between a center frequency of the first reference signal and a center frequency of the second reference signal; and
   the positioning bandwidth is a spacing between a maximum frequency domain location of the first reference signal and a minimum frequency domain location of the second reference signal.

4. The method according to claim 2 or 3, wherein the maximum gap between the first reference signal and the second reference signal is represented as at least one of the following information: a bandwidth between the first reference signal and the second reference signal, and a maximum quantity of resource blocks between the first reference signal and the second reference signal.

5. The method according to any one of claims 1 to 4, wherein the first reference signal is located on a first component carrier, the second reference signal is located on a second component carrier, and the first component carrier is adjacent to the second component carrier.

6. The method according to any one of claims 1 to 5, wherein the reference signal comprises any one of the following: a positioning reference signal PRS and a sounding reference signal SRS.

7. A positioning configuration method, wherein the method comprises:

   obtaining information about a gap between a first reference signal and a second reference signal that are for joint positioning; and
   sending configuration information of the first reference signal and the second reference signal, wherein the first reference signal and the second reference signal are configured based on the information about the gap between the first reference signal and the second reference signal.

8. The method according to claim 7, wherein the obtaining information about a gap between a first reference signal and a second reference signal that are for joint positioning comprises:
   receiving the reported information about the gap between the first reference signal and the second reference signal.

9. The method according to claim 7, wherein the obtaining information about a gap between a first reference signal and a second reference signal that are for joint positioning comprises:
determining the information about the gap between the first reference signal and the second reference signal, wherein the gap between the first reference signal and the second reference signal is associated with a bandwidth of the first reference signal and a bandwidth of the second reference signal.

10. The method according to any one of claims 7 to 9, wherein the information about the gap between the first reference signal and the second reference signal comprises one of the following information: a maximum gap between the first reference signal and the second reference signal, and a proportion of the gap between the first reference signal and the second reference signal in a positioning bandwidth.

11. The method according to claim 10, wherein the gap between the first reference signal and the second reference signal is a spacing between a minimum frequency domain location of the first reference signal and a maximum frequency domain location of the second reference signal, or the gap between the first reference signal and the second reference signal is a spacing between a center frequency of the first reference signal and a center frequency of the second reference signal; and
the positioning bandwidth is a spacing between a maximum frequency domain location of the first reference signal and a minimum frequency domain location of the second reference signal.

12. The method according to claim 10 or 11, wherein the maximum gap between the first reference signal and the second reference signal is represented as at least one of the following information: a maximum bandwidth between the first reference signal and the second reference signal, and a maximum quantity of resource blocks between the first reference signal and the second reference signal.

13. The method according to any one of claims 7 to 12, wherein the first reference signal is located on a first component carrier, the second reference signal is located on a second component carrier, and the first component carrier is adjacent to the second component carrier.

14. The method according to any one of claims 7 to 13, wherein the reference signal comprises any one of the following: a positioning reference signal PRS and a sounding reference signal SRS.

15. A positioning configuration apparatus, wherein the apparatus comprises a transceiver unit, wherein

the transceiver unit is configured to report information about a gap between a first reference signal and a second reference signal that are for joint positioning; and
the transceiver unit is further configured to receive configuration information of the first reference signal and the second reference signal, wherein the first reference signal and the second reference signal are configured based on the information about the gap between the first reference signal and the second reference signal.

16. The apparatus according to claim 15, wherein the information about the gap between the first reference signal and the second reference signal comprises one of the following information: a maximum gap between the first reference signal and the second reference signal, and a proportion of the gap between the first reference signal and the second reference signal in a positioning bandwidth.

17. The apparatus according to claim 15, wherein the gap between the first reference signal and the second reference signal is a spacing between a minimum frequency domain location of the first reference signal and a maximum frequency domain location of the second reference signal, or the gap between the first reference signal and the second reference signal is a spacing between a center frequency of the first reference signal and a center frequency of the second reference signal; and
the positioning bandwidth is a spacing between a maximum frequency domain location of the first reference signal and a minimum frequency domain location of the second reference signal.

18. The apparatus according to claim 16 or 17, wherein the maximum gap between the first reference signal and the second reference signal is represented as at least one of the following information: a bandwidth between the first reference signal and the second reference signal, and a maximum quantity of resource blocks between the first reference signal and the second reference signal.

19. The apparatus according to any one of claims 15 to 18, wherein the first reference signal is located on a first component carrier, the second reference signal is located on a second component carrier, and the first component carrier is adjacent to the second component carrier.

20. The apparatus according to any one of claims 15 to 19, wherein the reference signal comprises any one of the following: a positioning reference signal PRS and a sounding reference signal SRS.

21. A positioning configuration apparatus, wherein the apparatus comprises a processing unit and a transceiver unit, wherein

the processing unit is configured to obtain information about a gap between a first reference signal and a second reference signal that are for joint positioning; and
the transceiver unit is configured to send configuration information of the first reference signal and the second reference signal, wherein the first reference signal and the second reference signal are configured based on the information about the gap between the first reference signal and the second reference signal.

22. The apparatus according to claim 21, wherein the transceiver unit is further configured to receive the reported information about the gap between the first reference signal and the second reference signal.

23. The apparatus according to claim 21, wherein the processing unit is configured to determine the information about the gap between the first reference signal and the second reference signal, wherein the gap between the first reference signal and the second reference signal is associated with a bandwidth of the first reference signal and a bandwidth of the second reference signal.

24. The apparatus according to any one of claims 21 to 23, wherein the information about the gap between the first reference signal and the second reference signal comprises one of the following information: a maximum gap between the first reference signal and the second reference signal, and a proportion of the gap between the first reference signal and the second reference signal in a positioning bandwidth.

25. The apparatus according to claim 24, wherein the gap between the first reference signal and the second reference signal is a spacing between a minimum frequency domain location of the first reference signal and a maximum frequency domain location of the second reference signal, or the gap between the first reference signal and the second reference signal is a spacing between a center frequency of the first reference signal and a center frequency of the second reference signal; and
the positioning bandwidth is a spacing between a maximum frequency domain location of the first reference signal and a minimum frequency domain location of the second reference signal.

26. The apparatus according to claim 24 or 25, wherein the maximum gap between the first reference signal and the second reference signal is represented as at least one of the following information: a maximum bandwidth between the first reference signal and the second reference signal, and a maximum quantity of resource blocks between the first reference signal and the second reference signal.

27. The apparatus according to any one of claims 21 to 26, wherein the first reference signal is located on a first component carrier, the second reference signal is located on a second component carrier, and the first component carrier is adjacent to the second component carrier.

28. The apparatus according to any one of claims 21 to 27, wherein the reference signal comprises any one of the following: a positioning reference signal PRS and a sounding reference signal SRS.

29. A positioning configuration apparatus, comprising a processor, configured to execute a program stored in a memory, wherein when the program is executed, the apparatus is enabled to perform the method according to any one of claims 1 to 14.

30. A computer-readable storage medium, wherein the computer-readable storage medium stores a computer program, and when the computer program is executed by a processor, the method according to any one of claims 1 to 14 is implemented.

FIG. 1

FIG. 2

FIG. 3

FIG. 4

FIG. 5

FIG. 6

Bandwidth 1

FIG. 7

FIG. 8

FIG. 9

| Terminal | | Positioning device |
|---|---|---|

S1001: Information about a gap between a first reference signal and a second reference signal that are for joint positioning

S1002: Configuration information of the first reference signal and the second reference signal (where the first reference signal and the second reference signal are configured based on the information about the gap)

FIG. 10

FIG. 11A

FIG. 11B

FIG. 12

| Terminal | Access network device | Positioning device |
|---|---|---|

S1301: Information about a gap
between a first reference signal and a
second reference signal that are for
joint positioning

S1302: Higher layer signaling
(requesting configuration
information)

S1303: Higher layer signaling
(providing the configuration
information)

S1304: LPP signaling (including
the configuration information)

FIG. 13

| Terminal | Positioning device |
|---|---|

S1401: Determine information about a gap between a
first reference signal and a second reference signal

S1402: Configuration information of the first reference
signal and the second reference signal (where the first
reference signal and the second reference signal are
configured based on the information about the gap)

FIG. 14

1500

Positioning configuration
apparatus

1501

Transceiver unit

1502

Processing unit

FIG. 15

Antenna

1601

Radio frequency circuit

1602

Memory

Processor

Input/Output apparatus

FIG. 16

FIG. 17

FIG. 18

## INTERNATIONAL SEARCH REPORT

| International application No. |
| --- |
| **PCT/CN2023/105703** |

| A. | CLASSIFICATION OF SUBJECT MATTER |
| --- | --- |

H04W24/02(2009.01)i; H04W8/24(2009.01)i; H04L5/00(2006.01)i

According to International Patent Classification (IPC) or to both national classification and IPC

| B. | FIELDS SEARCHED |
| --- | --- |

Minimum documentation searched (classification system followed by classification symbols)

IPC:H04W,H04L

Documentation searched other than minimum documentation to the extent that such documents are included in the fields searched

Electronic data base consulted during the international search (name of data base and, where practicable, search terms used)

3GPP, CNTXT, ENTXT, ENTXTC, CNKI, IEEE: 参考信号, 定位, 间隔, 间距, 精度, 距离, 位置, 阀值, 阈值, 门限, 预设, 比例, 占比, 配置, 频点, 频率, 频域, 带宽, 能力, 最大, 最小, 载波, 聚合, 分量, reference signal?, PRS, SRS, position+, gap, threshold, ratio, configuration, frequency, bandwidth, ability, max+, min+, carrier, CA, CC, aggregation, component?

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | CN 114286330 A (HUAWEI TECHNOLOGIES CO., LTD.) 05 April 2022 (2022-04-05) description, paragraphs [0201]-[0243] and [0313]-[0322] | 1-30 |
| Y | CN 111869156 A (BEIJING XIAOMI MOBILE SOFTWARE CO., LTD.) 30 October 2020 (2020-10-30) description, paragraphs [0116]-[0143] | 1-30 |
| A | CN 112769531 A (VIVO MOBILE COMMUNICATIONS CO., LTD.) 07 May 2021 (2021-05-07) entire document | 1-30 |
| A | CN 113302994 A (QUALCOMM INC.) 24 August 2021 (2021-08-24) entire document | 1-30 |
| A | US 2022150866 A1 (DATANG MOBILE COMMUNICATIONS EQUIPMENT CO., LTD.) 12 May 2022 (2022-05-12) entire document | 1-30 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **04 September 2023** | **11 September 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/105703** |

**C.    DOCUMENTS CONSIDERED TO BE RELEVANT**

| Category* | Citation of document, with indication, where appropriate, of the relevant passages | Relevant to claim No. |
| --- | --- | --- |
| A | VIVO. "Discussion on gap configuration and request for NR positioning" *3GPP TSG-RAN WG2 Meeting #109bis-e R2-2002617*, 30 April 2020 (2020-04-30), entire document | 1-30 |

Form PCT/ISA/210 (second sheet) (July 2022)

**INTERNATIONAL SEARCH REPORT**
Information on patent family members

International application No.

**PCT/CN2023/105703**

| Patent document cited in search report | | | Publication date (day/month/year) | Patent family member(s) | | | Publication date (day/month/year) |
|---|---|---|---|---|---|---|---|
| CN | 114286330 | A | 05 April 2022 | WO | 2022063258 | A1 | 31 March 2022 |
| CN | 111869156 | A | 30 October 2020 | WO | 2021253241 | A1 | 23 December 2021 |
| | | | | IN | 202247077301 | A | 06 January 2023 |
| CN | 112769531 | A | 07 May 2021 | WO | 2021088705 | A1 | 14 May 2021 |
| CN | 113302994 | A | 24 August 2021 | WO | 2020154289 | A1 | 30 July 2020 |
| | | | | EP | 3915308 | A1 | 01 December 2021 |
| | | | | US | 2020235877 | A1 | 23 July 2020 |
| | | | | KR | 20210116489 | A | 27 September 2021 |
| | | | | AU | 2020211927 | A1 | 22 July 2021 |
| | | | | TW | 202033028 | A | 01 September 2020 |
| | | | | IN | 202127027205 | A | 10 September 2021 |
| | | | | BR | 112021013323 | A2 | 14 September 2021 |
| | | | | JP | 2022518167 | W | 14 March 2022 |
| US | 2022150866 | A1 | 12 May 2022 | KR | 20210124454 | A | 14 October 2021 |
| | | | | WO | 2020164361 | A1 | 20 August 2020 |
| | | | | EP | 3926357 | A1 | 22 December 2021 |
| | | | | CN | 115551079 | A | 30 December 2022 |
| | | | | CN | 111562546 | A | 21 August 2022 |

Form PCT/ISA/210 (patent family annex) (July 2022)

**EP 4 564 884 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210944967X